# Europäisches Patentamt

# European Patent Office

# Office européen des brevets

(11) Veröffentlichungsnummer: **0 180 087**
**B1**

## EUROPÄISCHE PATENTSCHRIFT

(45) Veröffentlichungstag der Patentschrift:
16.08.89

(51) Int. Cl.⁴: **B 32 B 27/32**, B 32 B 27/20

(21) Anmeldenummer: **85113053.4**

(22) Anmeldetag: **15.10.85**

(54) Coextrudierte mehrschichtige und biaxial gestreckte, opake Polyolefin-Folie mit verbesserten mechanischen Eigenschaften.

(30) Priorität: **23.10.84 DE 3438736**

(43) Veröffentlichungstag der Anmeldung:
**07.05.86 Patentblatt 86/19**

(45) Bekanntmachung des Hinweises auf die Patenterteilung:
**16.08.89 Patentblatt 89/33**

(84) Benannte Vertragsstaaten:
**BE DE FR GB IT NL**

(56) Entgegenhaltungen:
**EP-A- 0 114 311**
**DE-A- 2 814 311**

(73) Patentinhaber: **HOECHST AKTIENGESELLSCHAFT,**
**Postfach 80 03 20, D-6230 Frankfurt am Main 80 (DE)**

(72) Erfinder: **Bothe, Lothar, Dr., Am Heiligenhaus 9,**
**D-6500 Mainz-Gonsenheim (DE)**
Erfinder: **Crass, Günther, Bachstrasse 7,**
**D-6204 Taunusstein 4 (DE)**

## Beschreibung

Die Erfindung bezieht sich auf eine coextrudierte und biaxial gestreckte, opake Polyolefin-Folie mit verbesserten mechanischen Eigenschaften, die aus einer Füllstoff enthaltenden opaken Polyolefin-Trägerfolie und zwei die Trägerfolie beidseitig abdeckenden transparenten oder glasklaren Polyolefin-Deckschichten gebildet ist. Die Erfindung betrifft ferner ein Verfahren zur Herstellung solcher Folien und ihre Verwendung.

Aus der DE-B-28 14 311 und der US-A-4 377 616 ist eine durch Coextrusion hergestellte und biaxial gestreckte, opake Polyolefin-Folie bekannt, die aus einer opaken Trägerfolie und zwei transparenten oder glasklaren Aussenschichten (Deckschichten) aufgebaut ist. Die im Vergleich zu den Deckschichten beträchtlich dickere Trägerfolie ist einschichtig und besteht aus Polyolefin und Füllstoffen. Ihre Opazität resultiert daher, dass aufgrund des Füllstoffgehaltes und des biaxialen Streckens eine grosse Anzahl von Hohlräumen (Vakuolen) vorhanden sind. Beim Strecken wird die Polymermatrix an den Korngrenzen der mit der Polyolefin unverträglichen anorganischen oder organischen Füllstoffe aufgerissen, was zur Entstehung der genannten Vakuolen, d.h. zu freien (leeren oder ungefüllten) Räumen führt. Es versteht sich von selbst, dass diese Vakuolen oder Mikrohohlräume über das ganze Volumen der Trägerfolie verteilt sind. Durch die Brechung (Streuung) des Lichtes an den Hohlräumen wird das äusserst werbewirksame opake Aussehen verursacht. Da diese mehrschichtigen Polyolefin-Folien insbesondere auf dem Gebiet der Verpackung eingesetzt werden, wäre es vorteilhaft, wenn sie auch gute mechanische Eigenschaften besitzen würden. Gerade diesbezüglich lassen sie aber noch zu wünschen übrig. Dies gilt vor allem für die opaken Polyolefin-Folien mit niedriger Dichte, d.h. mit einer Dichte von kleiner als 0,9 g/cm$^3$.

Aus der EP-A-0 079 520 ist es ferner bekannt, sogenannte harte Harze, das sind natürliche oder synthetische Harze verschiedenster Art mit einem Erweichungspunkt von mindestens 70 °C, als Zusätze zu Polyolefinen zu verwenden. Bei den dort beschriebenen harzmodifizierten Polyolefin-Folien handelt es sich um lichtdurchlässige und nicht um opake Folien.

Die EP-A-0 114 311 beschreibt eine opake Folie mit dreischichtigem Aufbau, deren Basisschicht aus Polypropylen und unverträglichen Additiven und deren Deckschichten aus einer Additivkombination von vier verschiedenen Komponenten, unter anderem auch einem niedrig molekularen Harz, besteht. Diese Folie besitzt zwar eine niedrige Siegelanspringtemperatur und zufriedenstellende Gleiteigenschaften auf schnelllaufenden Verpackungsmaschinen, ihre mechanischen Eigenschaften lassen jedoch noch zu wünschen übrig.

Die Aufgabe der Erfindung besteht darin, eine opake Polyolefin-Folie der eingangs genannten Art zur Verfügung zu stellen, die auch gute mechanische Eigenschaften aufweist. Die neue opake Polyolefin-Folie soll insbesondere einen hohen Elastizitätsmodul in Längsrichtung besitzen.

Diese Aufgabe wird durch die im Anspruch 1 angegebene Polyolefin-Folie gelost. Ihre Tragerfolie ist dreischichtig aufgebaut, wobei entweder ihre Innenschicht (A) oder ihre beiden zwischen dieser Innenschicht (A) und den genannten Deckschichten (D, E) liegenden Zwischenschichten (B, C) aus einem füllstoffreien und mit einem natürlichen oder synthetischen Harz mit einem Erweichungspunkt von 70 bis 180 °C, vorzugsweise 80 bis 140 °C, modifizierten Polyolefin bestehen, während in der anderen Schicht bzw. Schichten der Trägerfolie, welche dieses Harz nicht enthalten, der Füllstoff vorhanden ist. Der Erweichungspunkt wird durch die Vicat-A-Messung (DIN 53460) ermittelt. Hierzu wird ein Stift mit einer Grundfläche von 1 mm$^2$ auf die Probe aufgesetzt und mit 1 kg belastet. Die Probe wird mit 50 °C/Stunde aufgeheizt und die Temperatur, bei welcher der Stift 1 mm in die Probe eingedrungen ist, gemessen.

Die Menge des zur Modifizierung des Polyolefins zugesetzten Harzes beträgt erfindungsgemäss im allgemeinen 1 bis 30 Gew.-%, vorzugsweise 5 bis 20 Gew.-%, bezogen auf das Polyolefin.

Die Unteransprüche geben weitere Ausbildungen der Folie an.

Bei einer besonders bevorzugten Ausführungsform der erfindungsgemässen opaken Polyolefin-Folie sind die drei Schichten der Trägerfolie derart ausgestaltet, dass die Innenschicht (A) aus einem Polyolefin und 1 bis 30 Gew.-%, vorzugsweise 5 bis 20 Gew.-%, bezogen auf das Polyolefin, von dem genannten Harz besteht und die beiden Zwischenschichten (B, C) aus einem Polyolefin und 3 bis 30 Gew.-%, vorzugsweise 10 bis 20 Gew.-%, bezogen auf das Polyolefin, von einem Füllstoff mit einer Teilchengrösse von 0, 1 bis 20 μm, vorzugsweise 1 bis 10 μm, bestehen. Bei einer anderen besonders bevorzugten Ausführungsform liegen die drei Schichten der Trägerfolie so vor, dass die Innenschicht (A) aus einem Polyolefin und 3 bis 30 Gew.-%, vorzugsweise 10 bis 20 Gew.-%, bezogen auf das Polyolefin, von einem Füllstoff mit einer Teilchengrösse von 0,1 bis 20 μm, vorzugsweise 1 bis 10 μm, besteht und die beiden Zwischenschichten (B, C) aus einem Polyolefin und 1 bis 30 Gew.-%, vorzugsweise 5 bis 20 Gew.-%, bezogen auf das Polyolefin, von dem genannten Harz bestehen. Von diesen beiden Ausführungsformen ist die erste bevorzugt, denn sie zeigt besonders gute mechanische Eigenschaften, insbesondere einen hohen Elastizitätsmodul.

Das Polyolefin der erfindungsgemässen opaken Polyolefin-Folie mit insgesamt fünf Schichten kann ein Olefinhomopolymeres, ein Olefincopolymeres oder eine Mischung davon sein. Es handelt sich in der Regel um Homo- und Copolymere von alpha-Olefinen mit 2 bis 8 Kohlenstoffatomen, vorzugsweise 2 bis 4 Kohlenstoffatomen. Bevorzugte Polyolefine sind Propylenhomopolymere, Propylencopolymere (Blockcopolymere oder statistische Copolymere), vorzugsweise solche mit bis zu 20 Gew.-% Comonomeranteil, wobei das Comonomere vorzugsweise Ethylen und/oder Buten-(1) ist, oder Mischungen von diesen Polymeren. Das Polyolefin für die Schichten A, B und C ist vorzugsweise ein Propylenhomopolymeres, wobei isotaktisches Polypropylen bevorzugt ist. Das Polyolefin für die Deckschichten D und E ist vorzugsweise ein Propylencopolymeres mit Ethylen und/oder Buten-(1) als Comonomere in einer Menge von vorzugsweise bis zu 20 Gew.-%, insbesondere bis zu 5 Gew.-%, bezogen auf das Copolymere.

Bei den zur Modifizierung des Polyolefins zugegebenen natürlichen oder synthetischen Harzen handelt es sich um die bekannten sogenannten harten Harze. Dazu zählen beispielsweise Kohlenwasserstoff-Harze wie Cumaronharze, Erdölharze und Terpenharze, Ketonharze, Polyamidharze, Aldehydharze wie Xylol-Formaldehydharze und Naphthalinformaldehydharze, Dammarharze und Kolophonium.

Cumaronharze werden meist durch Polymerisation von entphenolten und entbasten Fraktionen des Steinkohlenteer-Leichtöls gewonnen, die beispielsweise Inden, Styrol, Dicyclopentadien, Cumaron und deren Homologe als ungesättigte Verbindungen enthalten. Durch Copolymerisation, beispielsweise mit Phenol, ist eine vielseitige Modifikation möglich.

Die Rohstoffbasis der Erdölharze wird bei der Krackung von Naphtha- oder Gasöl auf Rohstoffe der chemischen Industrie wie Ethylen und Propylen gewonnen. Es handelt sich beispielsweise um harzbildende Verbindungen wie Buten, Butadien, Penten, Piperylen, Isopren, Cyclopentadien, Dicyclopentadien, Alkylbenzole, Methyldicyclopentadien, Methylinden, Naphthalin, Styrol, Inden, Vinyltoluol und Methylstyrol.

Bei Terpenharzen handelt es sich um Polymerisate von Terpenen. Als Beispiele für geeignete Terpene seien beta-Pinen, Dipenten, Limonen, Myrcen, Bronylen, Camphen und ähnliche Terpene genannt.

Die Kohlenwasserstoff-Harze können beispielsweise durch Reaktion der Rohstoffe vor der Polymerisation, durch Einführung spezieller Monomerer oder durch Reaktion des polymerisierten Produktes modifiziert werden. Eine bevorzugte Modifizierungsart ist die Hydrierung oder Teilhydrierung ungesättigter Bestandteile der Harze. Dammarharze werden durch Lebendharzung von Bäumen der Familie Dipterocarpaicae gewonnen.

Kolophonium ist ein natürliches Harz, das aus dem Rohbalsam der Koniferen (Balsamharz), dem Extrakt der Koniferenstubben (Wurzelharz) oder aus Tallöl (Tallharz) gewonnen wird und im wesentlichen aus Abietinsäure und deren Isomeren besteht. Es kann sich auch um modifiziertes Kolophonium handeln, das durch Polymerisieren, Hydrieren, Dehydrieren, Oxidieren, Decarboxilieren, Verseifen, Verestern, Isomerisieren oder Disproportionieren von Kolophonium entsteht.

Bevorzugte Harze sind Styrolpolymerisate, alpha-Methylstyrol-Styrolcopolymerisate, alpha-Methylstyrol-Vinyltoluol-Copolymerisate, hydrierte alpha-Methylstyrol-vinyltoluol-inden-Copolymerisate, Pentadienpolymerisate, hydrierte Cyclopentadien-Polymerisate, alpha-Pinen-oder beta-Pinen-Polymerisate, Terpenpolymerisate, Kolophonium und modifiziertes Kolophonium.

Bei den Füllstoffen handelt es sich um die üblichen mit Polyolefinen unverträglichen, vorzugsweise anorganischen pulverförmigen Materialien. Geeignete Füllstoffe sind Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und/oder Titandioxid, worunter Bariumsulfat, Calciumcarbonat, Siliciumdioxid, Titandioxid oder Mischungen davon bevorzugt eingesetzt werden. Calciumcarbonat (Kreide) ist ein besonders bevorzugter Füllstoff. Die (mittlere) Teilchengrösse des pulverförmigen Füllstoffes liegt im Bereich von 0, 1 bis 200 μm, vorzugsweise 1 bis 10 μm.

Neben dem Polyolefin, dem Harz und dem Füllstoff können die einzelnen Schichten der erfindungsgemässen opaken Polyolefin-Folie auch noch zweckmässige Additive wie Farbstoffe, Stabilisatoren, Antioxidantien, Antistatika und/oder andere Mittel für spezielle Ausrüstungen in einer jeweils wirksamen Menge enthalten. Nach einer bevorzugten Ausführungsform enthalten die beiden Deckschichten (D, E), die aus dem gleichen oder einem jeweils anderen Polyolefin bestehen können, ein Antiblockmittel. Nach einer anderen bevorzugten Ausführungsform enthält eine der beiden Deckschichten ein zu Klebern wie Kautschuk- und Acrylatklebern adhäsives Mittel und die andere Deckschicht ein antiadhäsives Mittel.

Als Adhäsionsmittel gegenüber Klebern, insbesondere gegenüber Kautschuk- und Acrylatklebern, sind die oben genannten natürlichen oder synthetischen Harze und als Antiadhäsionsmittel Poly-diorgano-siloxane geeignet. Im Falle des Aufbringens einer Poly-diorgano-siloxan-Schicht ist es zweckmässig, diese einer Gasentladungsbehandlung zu unterwerfen. Nach einer weiteren bevorzugten Ausführungsform ist eine der beiden Deckschichten, die zweckmässigerweise ein Adhäsionsmittel gegenüber Klebern enthält, mit einer Kleberschicht, vorzugsweise mit einer Kautschuk- oder Acrylatkleberschicht, versehen. Bei einer besonders bevorzugten Ausführungsform sind die beiden Deckschichten heisssiegelbar.

Die erfindungsgemässe fünfschichtige opake Polyolefin-Folie hat eine Dicke (Gesamtdicke) von etwa 10 bis 80 μm, vorzugsweise 20 bis 60 μm. Zur Erreichung eines sehr hohen Elastizitätsmoduls sollten die Dicken der Schichten, insbesondere die Dicken der drei Schichten der Trägerfolie, in einem besonderen Verhältnis zueinander stehen. Es ist bevorzugt, dass die Dicke der Innenschicht (A) 30 bis 60% der Gesamtdicke ausmacht und die Summe der Dicken der beiden Zwischenschichten (B, C) 30 bis 60% und jene der beiden Deckschichten (D, E) 2 bis 10% der Gesamtdicke ausmachen. Die zwei Zwischenschichten (B, C) können verschiedene Dicken haben, vorzugsweise sind sie aber gleich dick. Das gleiche gilt für die zwei Deckschichten (D, E), deren Dicke jeweils vorzugsweise 0,5 bis 2 µm beträgt, so dass in bevorzugter Ausführungsform die Folie einen symmetrischen Aufbau zeigt.

Die Dichte der erfindungsgemässen Polyolefin-Folie ist infolge der Vakuolenstruktur der die Füllstoffteilchen enthaltenden Schicht kleiner als 0,9 g/cm³, vorzugsweise kleiner als 0,7 g/cm³ und insbesondere kleiner als 0,6 g/cm³. Die Vakuolenstruktur ist auch für den perlmuttartigen Glanz der Folie verantwortlich, der besonders stark ausgeprägt ist, wenn die Vakuolenstruktur in der Innenschicht der Trägerfolie vorhanden ist.

Die eingangs genannte Aufgabe wird ferner gelöst durch das Verfahren zur Herstellung der erfindungsgemässen Polyolefin-Folie nach Anspruch 9. Es ist dadurch gekennzeichnet, dass man die den einzelnen Schichten der Folie entspechenden Schmelzen durch eine Flachdüse coextrudiert, die durch Coextrusion erhaltene Folie zur Verfestigung abkühlt, die Folie in Längsrichtung um das Fünf- bis Siebenfache und in Querrichtung um das Acht- bis Zehnfache streckt und die biaxial gestreckte Folie thermofixiert, wobei mindestens einmal längsgestreckt wird und die Temperatur der Folie bei der ersten Längsstreckung bis zu 20 °C unterhalb der Temperatur liegt, bei welcher üblicherweise eine klare Folie aus dem gleichen Material gestreckt wird.

Die Herstellung der erfindungsgemässen mehrschichtigen opaken Polyolefin-Folien erfolgt also durch das an sich bekannte Coextrusionsverfahren. Hierbei wird das Polymere oder die Polymermischung der einzelnen Schichten in einem Extruder verflüssigt und komprimiert. Die Schmelzen werden dann gleichzeitig durch eine Flachdüse (Breitschlitzdüse) gepresst und die ausgepresste mehrschichtige Folie wird auf einer oder mehreren Walzen, die durch Kühlung auf etwa 30 bis 50 °C gehalten werden, abgekühlt und verfestigt. Die so erhaltene Folie wird dann bei einer Temperatur unterhalb des Schmelzpunktes des eingesetzten Polymeren längs und quer zur Extrusionsrichtung gestreckt, was zu eine Orientierung der Molekülketten führt. Das Verhältnis (Gesamtverhältnis) der Streckung beträgt erfindungsgemäss in Längsrichtung 5 bis 7 : 1 und in Querrichtung 8 bis 10 : 1. Die erste Längsstreckung wird vorzugsweise bei einer Folientemperatur von 120 bis 130 °C und die gegebenenfalls weiteren Längsstreckungen sowie die Querstreckung vorzugsweise bei einer Folientemperatur von 160 bis 170 °C durchgeführt. Die biaxiale Streckung kann simultan oder nacheinander (zuerst längs und dann quer oder umgekehrt) vorgenommen werden. Es ist bevorzugt, die Streckung in drei Stufen durchzuführen, und zwar in einer der folgenden Reihenfolgen: längs-quer-längs, längs-längs-quer, längs-simultan (längs/quer), oder simultan (längs/quer)-längs, wobei die Reihenfolge längs-quer-längs besonders bevorzugt ist. Das Längsstrecken wird man zweckmässigerweise mit Hilfe zweier, entsprechend dem angestrebten Streckverhältnis verschieden schnell laufender Walzen durchführen und das Querstrecken mit Hilfe eines entsprechenden Kluppenrahmens. An die biaxiale Streckung der Folie schliesst sich ihre Thermofixierung (Wärmebehandlung) an. Auch diese wird in an sich bekannter Weise vorgenommen, nämlich dadurch, dass die Folie etwa 0,5 bis 10 Sekunden lang, vorzugsweise 1 bis 5 Sekunden lang, bei einer Temperatur von 150 bis 160 °C gehalten wird. Die thermofixierte Folie wird in üblicher Weise durch Führen über Kühlwalzen abgekühlt und mit Hilfe einer Aufwickeleinrichtung aufgewickelt.

Die erfindungsgemässe opake Polyolefin-Folie wird vorteilhaft überall dort eingesetzt, wo sie einen hohen Elastizitätsmodul und gegebenenfalls auch eine niedrige Dichte besitzen soll. Sie wird vorzugsweise für Verpackungszwecke, insbesondere als Papierersatz, d.h. auf dem Gebiet der Papierverpackung, und als Klebebandfolie verwendet.

Die Erfindung wird nun an Beispielen noch näher erläutert.

Beispiel 1

Es wurde eine aus 5 Schichten bestehende opake Polyolefin-Folie mit einer Flachdüse coextrudiert. Im einzelnen bestand die Polyolefin-Folie aus einer dreischichtigen Trägerfolie und zwei äusseren Deckschichten (D, E). Die drei Schichten der Trägerfolie bestanden aus einer Innenschicht (A) und zwei Zwischenschichten (B und C) zwischen der Innenschicht (A) und den beiden Deckschichten (D und E). Die zur Coextrusion gelangenden fünf Schmelzen A bis E entsprechend den genannten fünf Schichten waren wie folgt zusammengesetzt:

Die Schmelze A bestand aus einem Polypropylen (isotaktisch) und 15 Gew.-%, bezogen auf das Polypropylen, von dem synthetischen Harz alpha-Methylstyrol-Styrol-Copolymerisat mit einem Erweichungspunkt von 130 °C;

Die Schmelzen B und C bestanden jeweils aus einem Polypropylen (dem gleichen wie in Schmelze A) und 15 Gew.-%, bezogen auf das Polypropylen, Calciumcarbonat mit einer mittleren Teilchengrösse von 5 µm;

Die Schmelzen D und E bestanden jeweils aus einem heiss-siegelbaren Propylen-Copolymerisat (statistisch) mit 4 Gew.-% Ethylen, bezogen auf das Copolymerisat.

Die Temperatur der Schmelzen betrug jeweils 270 °C (Coextrusionstemperatur). Nach dem Abkühlen der coextrudierten fünfschichtigen Folie auf einer Kühlwalze mit etwa 30 °C wurde die Folie bei 125 °C um den Faktor 6 längs- und anschliessend bei 165 °C um den Faktor 9 quergestreckt. Die nachfolgende Thermofixierung erfolgte bei 160 °C 5 Sekunden lang.

Die so erhaltene opake Polypropylen-Folie mit fünf Schichten war 40 µm dick und hatte eine Dichte von 0,65 g/cm³.

Die einzelnen Schichten hatten folgende Dicke:
- Schicht A: 18 μm
- Schichten B und C: jeweils 10 μm
- Schichten D und E: jeweils 1 μm.

Der Elastizitätsmodul in Längsrichtung der Folie betrug 2400 N/mm².

Beispiel 2

Es wurde wie in Beispiel 1 eine aus 5 Schichten bestehende opake Polyolefin-Folie coextrudiert (Schichten A bis E), biaxial gestreckt und thermofixiert.

Die zur Coextrusion gelangenden 5 Schmelzen A bis E entsprechend den genannten 5 Schichten waren wie folgt zusammengesetzt:

- Die Schmelze A bestand aus einem Polypropylen (isotaktisch) und 15 Gew.-%, bezogen auf das Polypropylen, Calciumcarbonat mit einer mittleren Teilchengrösse von 5 μm;
- Die Schmelzen B und C bestanden jeweils aus einem Polypropylen (dem gleichen wie in der Schmelze A) und 15 Gew.-%, bezogen auf das Polypropylen, von dem synthetischen Harz alpha-Methylstyrol-Styrolcopolymerisat mit einem Erweichungspunkt von 130 °C.
- Die Schmelzen D und E bestanden jeweils aus einem heiss-siegelbaren Propylen-Copolymerisat (statistisch) mit 4 Gew.-% Ethylen, bezogen auf das Copolymerisat.

Die erhaltene opake Polyolefin-Folie mit 5 Schichten war 40 μm dick und hatte eine Dichte von 0,65 g/cm³. Die einzelnen Schichten hatten die folgende Dicke:
- Schicht A: 18 μm
- Schichten B und C: jeweils 10 μm
- Schichten D und E: jeweils 1 μm.

Der Elastizitätsmodul in Längsrichtung der Folie betrug 2400 N/mm².

## Patentansprüche

1. Coextrudierte und biaxial gestreckte, opake Polyolefin-Folie mit einer Dichte von kleiner als 0,9 g/cm³, die aus einer Füllstoff enthaltenden opaken Polyolefin-Trägerfolie und die Trägerfolie beidseitig abdeckenden transparenten oder glasklaren Polyolefin-Deckschichten (D, E) gebildet ist, dadurch gekennzeichnet, dass die Trägerfolie zur Verbesserung der mechanischen Eigenschaften dreischichtig aus einer Innenschicht (A) und zwei äusseren Zwischenschichten (B, C) aufgebaut ist, dass die Innenschicht (A) oder die Zwischenschichten (B, C) der Trägerfolie den Füllstoff enthalten und dass die füllstoffreie Schicht (bzw. Schichten) der Trägerfolie aus einem mit einem natürlichen oder synthetischen Harz mit einem Erweichungspunkt von 70 bis 180 °C modifizierten Polyolefin besteht (bzw. bestehen).

2. Polyolefin-Folie nach Anspruch 1, dadurch gekennzeichnet, dass die Innenschicht (A) aus einem Polyolefin und 1 bis 30 Gew.-%, bezogen auf das Polyolefin, von dem genannten Harz besteht und die beiden Zwischenschichten (B, C) aus einem Polyolefin und 3 bis 30 Gew.-%, bezogen auf das Polyolefin, von einem Füllstoff mit einer Teilchengrösse von 0,1 bis 20 μm bestehen.

3. Polyolefin-Folie nach Anspruch 1, dadurch gekennzeichnet, dass die Innenschicht (A) aus einem Polyolefin und 3 bis 30 Gew.-%, bezogen auf das Polyolefin, von einem Füllstoff mit einer Teilchengrösse von 0,1 bis 20 μm besteht und die beiden Zwischenschichten (B, C) aus einem Polyolefin, von dem genannten Harz bestehen.

4. Polyolefin-Folie nach einem der Ansprüche 1 bis 3, dadurch gekennzeichnet, dass das Polyolefin der Schichten (A, B, C) der Trägerfolie ein Propylen-Homopolymeres und das Polyolefin der Deckschichten (D, E) ein Propylen-Copolymeres mit Ethylen und/oder Buten-(1) als Comonomere in einer Menge von bis zu 20 Gew.-%, bezogen auf das Copolymere, ist.

5. Polyolefin-Folie nach einem der Ansprüche 1 bis 4, dadurch gekennzeichnet, dass das Harz ein Styrolpolymerisat, alpha-Methylstyrol-Styrol-Copolymerisat, alpha-Methylstyrol-Vinyltoluol-Copolymerisat, hydriertes alpha-Methylstyrol-vinyltoluol-inden-Copolymerisat, Pentadienpolymerisat, hydriertes Cyclopentadien-Polymerisat, alpha-Pinen- oder beta-Pinenpolymerisat, Terpenpolymerisat, Kolophonium oder modifiziertes Kolophonium ist.

6. Polyolefin-Folie nach einem der Ansprüche 1 bis 5, dadurch gekennzeichnet, dass der Füllstoff Bariumsulfat, Calciumcarbonat, Siliciumdioxid oder Titandioxid ist.

7. Polyolefin-Folie nach einem der Ansprüche 1 bis 6, dadurch gekennzeichnet, dass ihre Dicke 10 bis 80 μm beträgt, wobei die Dicke der Innenschicht (A) 30 bis 60% von der Gesamtdicke, die Summe der Dicken der beiden Zwischenschichten (B, C) 30 bis 60% von der Gesamtdicke und die Summe der Dicken der beiden Deckschichten (D, E) 2 bis 10% von der Gesamtdicke ausmachen.

8. Polyolefin-Folie nach einem der Ansprüche 1 bis 7, dadurch gekennzeichnet, dass ihre Dichte kleiner als 0,7 g/cm³ ist.

9. Verfahren zur Herstellung einer Polyolefin-Folie nach einem der Ansprüche 1 bis 8, dadurch gekennzeichnet, dass man die den einzelnen Schichten der Folie entsprechenden Schmelzen durch eine Flachdüse coextrudiert, die durch Coextrusion erhaltene Folie zur Verfestigung abkühlt, die Folie in Längsrichtung um das Fünf- bis Siebenfache und in Querrichtung um das Acht- bis Zehnfache streckt und die biaxial gestreckte Folie thermofixiert, wobei mindestens einmal längsgestreckt wird und die Temperatur der Folie bei der ersten Längsstreckung im Bereich von 120 bis 130 °C liegt.

10. Verwendung der Polyolefin-Folie nach einem der Ansprüche 1 bis 8 für Verpackungszwecke.

## Revendications

1. Feuille opaque de Polyoléfine coextrudée et étirée biaxialement ayant une densité inférieure à 0,9 g/cm³ et constituée d'une feuille support opaque en polyoléfine renfermant une charge et des couches de couverture (D, E) transparentes ou claires en polyoléfine recouvrant les deux côtés la feuille support, caractérisée en ce que la feuille support se compose, en vue d'améliorer les propriétés mécaniques, de trois couches: une couche interne (A) et deux couches intermédiaires (B, C), la couche interne (A) ou les couches intermédiaires (B, C) de la feuille support contiennent la charge et la(les) couche(s) exempte(s) de charge de la feuille support est (sont) formée(s) d'une polyoléfine modifiée par une résine naturelle ou synthétique de point de ramollissement 70 à 180 °C.

2. Feuille de polyoléfine selon la revendication 1, caractérisée en ce que la couche interne (A) se compose d'une polyoléfine et de 1 à 30% en poids, par rapport à la polyoléfine, de ladite résine, et les deux couches intermédiaires (B, C) sont formées d'une polyoléfine et de 3 à 30% en poids, par rapport à la polyoléfine, d'une charge dont la taille de particules est égale à 0,1 à 20 μm.

3. Feuille de polyoléfine selon la revendication 1, caractérisée en ce que la couche interne (A) se compose d'une polyoléfine et de 3 à 30% en poids, par rapport à la polyoléfine, d'une charge dont la taille de particules est égale à 0,1 à 20 μm, et les deux couches intermédiaires (B, C) sont formées d'une polyoléfine et de 1 à 30% en poids, par rapport à la polyoléfine, de ladite résine.

4. Feuille de polyoléfine selon l'une quelconque des revendications 1 à 3, caractérisée en ce que la polyoléfine des couches (A, B, C) de la feuille support est un homopolymère de propylène et la polyoléfine des couches de couverture (D, E) est un copolymère de propylène avec l'éthylène et/ou le butène-1 comme comonomère en quantité allant jusqu'à 20% en poids par rapport au copolymère.

5. Feuille de polyoléfine selon l'une quelconque des revendications 1 à 4, caractérisée en ce que la résine est un polymérisat de styrène, un copolymérisat alpha-méthylstyrène-styrène, un copolymérisat alpha-méthylstyrène-vinyltoluène, un copolymérisat alpha-méthylstyrène-vinyltoluène-indène hydrogéné, un polymérisat de pentadiène, un polymérisat de cyclopentadiène hydrogéné, un polymérisat d'alpha-pinène ou de beta-pinène, un polymérisat terpénique, la colophane ou la colophane modifiée.

6. Feuille de polyoléfine selon l'une quelconque des revendications 1 à 5, caractérisée en ce que la charge est le sulfate de baryum, le carbonate de calcium, le dioxyde de silicium ou le dioxyde de titane.

7. Feuille de polyoléfine selon l'une quelconque des revendications 1 à 6, caractérisée en ce que son épaisseur est de 10 à 80 μm, l'épaisseur de la couche interne(A) étant de 30 à 60% de l'épaisseur totale, la somme des épaisseurs des deux couches intermédiaires (B, C) étant de 30 à 60% de l'épaisseur totale et la somme des épaisseurs des deux couches de couverture (D, E) étant de 2 à 10% de l'épaisseur totale.

8. Feuille de polyoléfine selon l'une quelconque des revendications 1 à 7, caractérisée en ce que sa densité est inférieure à 0,7 g/cm³.

9. Procédé de fabrication d'une feuille de polyoléfine selon l'une quelconque des revendications 1 à 8, caractérisé en ce que l'on coextrude les masses fondues correspondant aux diverses couches de la feuille à l'aide d'un filière plate, que l'on refroidit, pour la solidifier, la feuille obtenue par coextrusion, que l'on étire la feuille longitudinalement de cinq à sept fois et transversalement de huit à dix fois, et que l'on durcit à la chaleur la feuille étirée biaxialement, l'étirage longitudinal étant réalisé au moins une fois et la température du film lors de la première opération d'étirage longitudinal se situant dans l'invervalle 120–130 °C.

10. Utilisation pour l'emballage de la feuille de polyoléfine selon l'une quelconque des revendications 1 à 8.

**Claims**

1. Coextruded and biaxially stretched, opaque polyolefin film having a density of less than 0,9 g/cm³, which comprises a filler-containing opaque polyolefin support film and transparent or clear polyolefin covering layers (D and E) which cover the two surfaces of the support film, wherein the support film is composed of three layers to improve its mechanical properties, the layers comprising an inner layer (A) and two intermediate layers (B and C) on the outsides thereof, the filler is included in the inner layer (A) or in the intermediate layers (B and C) of the support film and the filler-free layer (or layers) of the support film, comprises (or comprise) a polyolefin which is modified with a natural or synthetic resin having a softening point in the range from 70 to 180 °C.

2. A polyolefin film as claimed in claim 1, wherein the inner layer (A) comprises a polyolefin and from 1 to 30% by weight, relative to the polyolefin, of the above-indicated resin and the two intermediate layers (B and C) comprise a polyolefin and from 3 to 30% by weight, relative to the polyolefin, of a filler having a particle size from 0.1 to 20 μm.

3. A polyolefin film as claimed in claim 1, wherein the inner layer (A) comprises a polyolefin and from 3 to 30% by weight, relative to the polyolefin, of a filler having a particle size from 0.1 to 20 μm and the two intermediate layers (B and C) comprise a polyolefin and from 1 to 30% by weight, relative to the polyolefin, of the above-indicated resin.

4. A polyolefin film as claimed in any of claims 1 to 3, wherein the polyolefin of the layers (A, B, and C) forming the support film comprises a propylene homopolymer and the polyolefin of the covering layers (D and E) comprises a propylene copolymer with ethylene and/or butene-(1) as the comonomers which are present in a quantity of up to 20% by weight, relative to the copolymer.

5. A polyolefin film as claimed in any of claims 1 to 4, wherein the resin comprises a styrene polymer, an alpha-methylstyrene/styrene copolymer, an alpha-methylstyrene/vinyltoluene copolymer, a hydrogenated alpha-methylstyrene/vinyltoluene/indene copolymer, a pentadiene polymer, a hydrogenated cyclopentadiene polymer, an alpha-pinene or beta-pinene polymer, a terpene polymer, colophony or a modified colophony.

6. A polyolefin film as claimed in any of claims 1 to 5, wherein the filler comprises barium sulfate, calcium carbonate, silicon dioxide or titanium dioxide.

7. A polyolefin film as claimed in claims 1 to 6, which has a thickness from 10 to 80 µm, the thickness of the inner layer (A) being from 30 to 60% of the total thickness, the sum of the thicknesses of the two intermediate layers (B and C) from 30 to 60% of the total thickness, and the sum of the thicknesses of the two covering layers (D and E) from 2 to 10% of the total thickness.

8. A polyolefin film as claimed in any of claims 1 to 7, which has a density of less than 0.7 g/cm$^3$.

9. Process for the production of a polyolefin film as claimed in any of claims 1 to 8, wherein the melts corresponding to the individual layers of the film are coextruded through a flat sheet die, the film obtained by coextrusion is cooled to effect solidification; the film is stretched five to sevenfold in the longitudinal direction and eight to tenfold in the transverse direction and the biaxially stretched film is heat set; the film being stretched at least once in the longitudinal direction and the temperature of the film during the first longitudinal operation being in the range from 120 to 130 °C.

10. Use of the polyolefin film as claimed in any of claims 1 to 8 for packaging purposes.